# EUROPÄISCHE PATENTSCHRIFT

(11) **EP 3 575 182 B1**
(45) Veröffentlichungstag und Bekanntmachung des Hinweises auf die Patenterteilung: **07.04.2021**
(21) Anmeldenummer: 19174406.9
(22) Anmeldetag: 14.05.2019
(51) Int. Cl.: B62D 1/06, B62D 1/04, G01D 5/353

(54) **BEHEIZBARER BERÜHRUNGSSENSOR UND LENKRAD AUFWEISEND EINEN DERARTIGEN BERÜHRUNGSSENSOR**
HEATABLE TOUCH SENSOR AND STEERING WHEEL COMPRISING SUCH A TOUCH SENSOR
CAPTEUR DE CONTACT CHAUFFABLE ET VOLANT COMPORTANT UN TEL CAPTEUR DE CONTACT

(30) Priorität: 31.05.2018 DE 102018113062; 31.05.2018 DE 102018113061
(43) Veröffentlichungstag der Anmeldung: 04.12.2019
(73) Patentinhaber: Volkswagen AG, 38440 Wolfsburg (DE)
(72) Erfinder: Zlatkov, Branislav, 38104 Braunschweig (DE); Djinovic, Zoran, 2700 Wr. Neustadt (AT); Quander, Nils, 38154 Königslutter (DE); Danschacher, Markus, 38110 Braunschweig (DE); Utech, Klaus, 38165 Lehre (DE); Nickel, Patrick, 02991 Leippe-Torno (DE)
(74) Vertreter: Gulde & Partner

(56) Entgegenhaltungen:
- WO-A2-2004/022409
- US-A1- 2017 192 451

## Beschreibung

Beheizbarer Berührungssensor und Lenkrad aufweisend einen derartigen Berührungssensor Die Erfindung betrifft einen beheizbaren Berührungssensor, insbesondere zur Anwendung an einem Lenkrad eines Fahrzeuges. Durch den beheizbaren Berührungssensor kann eine Berührungserfassung des Lenkrades und eine Lenkradheizung realisiert werden.

In der DE 10 2014 016 422 A1 wird eine Vorrichtung zum Erfassen einer Lenkradberührung vorgestellt, bei der in einem Lenkrad eine erste Elektrode angeordnet ist, und der menschliche Körper bei Berührung die zweite Elektrode darstellt und zwischen diesen beiden Elektroden ein Dielektrikum angeordnet ist. Nachteilig an dieser Lösung ist eine ungenaue Detektion der Lenkradberührung, da diese durch ein Knie beziehungsweise eine Flasche ebenfalls auslöst. Zudem wird aufgrund des kapazitiven Prinzips eine Berührung mit Handschuhen häufig nicht erkannt.

In der EP 0 832 806 A1 wird ein Lenkrad mit integrierter Lenkradheizung vorgestellt, bei dem der Lenkradkranz unter seinem Außenbezug eine Schicht aus thermoplastischem Kunststoff aufweist, in der sich ein Heizdraht befindet.

Die vorgenannten Möglichkeiten zur Erfassung einer Lenkradberührung und zum Heizen eines Lenkradkranzes sind zusätzlich zu den bereits genannten Nachteilen nur mit hohem Montageaufwand in ein Lenkrad integrierbar, der mit hohen Kosten einhergeht. Ursächlich hierfür ist neben der Vielzahl zu verbauender Teile, dass das kapazitive Erkennungsprinzip für eine einwandfreie Erkennung eine elektromagnetische Schirmung gegenüber den Heizelementen benötigt.

Nicht zuletzt ist die kapazitive Erfassung ein flächiges Bauelement, die Lenkradheizung muss unter diesem angeordnet werden, was nachteilig mit hohen Wärmeverlusten einhergeht.

WO 2004/022409 A2 offenbart den Oberbegriff der unabhängigen Ansprüche und zeigt eine Lenkhandhabe für Kraftfahrzeuge und Verfahren zum Erfassen einer physikalischen Größe auf einer Lenkhandhabe. Die Lenkhandhabe kann hierzu ein Lichtwellenleiter und einen elektrischen Heizleiter aufweisen.

Der Erfindung liegt nun die Aufgabe zugrunde, eine Kombination aus einem Berührungssensor und einer Heizung vorzuschlagen, die eine sehr genaue Detektion ermöglicht, kostengünstig herstellbar und mit geringem Montageaufwand in ein Lenkrad integrierbar ist.

Der erfindungsgemäße beheizbare Berührungssensor ist ein faseroptischer Berührungssensor und weist einen Lichtwellenleiter auf, der mit einem elektrischen Heizleiter verbunden ist. Der Lichtwellenleiter ändert bei Lageänderung beziehungsweise Biegung sein zu messendes Übertragungsverhalten. Im Betrieb wird der Lichtwellenleiter beispielsweise mittels einer Fotodiode an einem Ende mit Licht beaufschlagt und am anderen Ende werden mittels geeigneter Sensorik Änderungen des übertragenen Lichtes festgestellt. Der Lichtwellenleiter kann dabei aus Glas- oder Kunststofffasern bestehen.

Der Heizleiter stellt eine Widerstandsheizung dar, welche durch Anlegen einer elektrischen Spannung und den damit verbundenen Stromfluss elektrische Energie in Wärme umwandelt und diese an die Umgebung abgibt.

Vorteilhaft können so durch den Einbau eines Bauteils, beispielsweise in ein Lenkrad, eine Berührungserkennung und eine Heizfunktion realisiert werden. Weiterhin vorteilhaft ermöglicht die Verwendung eines faseroptischen Berührungssensors eine hohe Detektionsgenauigkeit, die eine Fehlauslösung beziehungsweise ein "Überlisten" der Erkennung, beispielsweise durch ein Knie oder eine Flasche am Lenkrad verhindert und auch mit Handschuhen unverändert funktioniert. Zudem hat der faseroptische Berührungssensor eine kürzere Ansprechzeit, als kapazitive Sensoren nach dem Stand der Technik.

In einer bevorzugten Ausgestaltung der Erfindung ist vorgesehen, dass der elektrische Heizleiter eine auf den faseroptischen Berührungssensor aufgebrachte elektrisch leitfähige Beschichtung ist. Diese Beschichtung kann beispielsweise eine Kupferschicht sein, es sind aber auch andere Materialen wie Aluminium, Chrom oder Nickel einsetzbar. Im Stand der Technik sind eine Vielzahl an Materialien für Heizleiter bekannt. Vorteilhaft hat der Heizleiter so eine sehr homogene Wärmeabgabe.

Weiterhin bevorzugt ist auf der elektrisch leitfähigen Beschichtung ein Isolationslack oder eine Ummantelung aus einem elektrisch nicht leitfähigen Material, beispielsweise einer Kunststoffummantelung, vorgesehen, beispielsweise aus Polyimid, Silikon, Teflon PEEK, PEK, PP, PA ,PE etc.. Vorteilhaft kann so ein elektrischer Kurzschluss der Heizleiter, beispielsweise durch Lageveränderung im Lenkrad aufgrund von Materialermüdung durch Alterung, verhindert werden.

In einer weiteren bevorzugten Ausführung ist vorgesehen, dass zwischen der elektrisch leitfähigen Ummantelung und dem faseroptischen Berührungssensor eine Schicht aus Karbon angeordnet ist. Vorteilhaft stabilisiert die Karbonschicht den faseroptischen Berührungssensor. In einer weiteren bevorzugten Ausgestaltung ist vorgesehen, dass der Lichtwellenleiter eine Monomodefaser aufweist. Eine Monomodefaser ist für die Berührungserkennung vorteilhaft besonders gut geeignet und ermöglicht eine sehr genaue Detektion. Die Monomodefaser kann dabei verschiedene Kern-Durchmesser aufweisen, anwendbar sind zum Beispiel 4µm, 6µm, 8µm, 9µm und 10 µm etc..

In weiterer bevorzugter Ausgestaltung ist vorgesehen, dass der faseroptische Berührungssensor mittels optischer Interferometrie erfolgt. Dieses Messprinzip funktioniert besonders gut in Verbindung mit einer Monomodefaser und ermöglicht vorteilhaft eine sehr große Auflösung und damit eine sehr genaue Detektion.

In einer weiteren bevorzugten Ausgestaltung ist vorgesehen, dass der beheizbare Berührungssensor auf einer Trägerfolie angeordnet ist. Bevorzugt wird der beheizbare Berührungssensor dabei so auf der Trägerfolie fixiert, dass deren Fläche abgedeckt ist. Beispielsweise kann der beheizbare Berührungssensor hierfür mäander- oder schneckenförmig auf der Trägerfolie angeordnet sein. Die Fixierung auf der Trägerfolie erfolgt bevorzugt mittels Kleben. Es versteht sich, dass für den Fall, dass der Heizleiter außen keine Isolationsschicht aufweist, die Trägerfolie nicht elektrisch leitfähig sein darf oder selbst eine Isolationsschicht aufweisen muss, um einen elektrischen Kurzschluss der Heizleiter zu verhindern. Vorteilhaft wird durch die Anordnung des Berührungssensors auf einer Trägerfolie die Montage am Bestimmungsort deutlich vereinfacht. Beispielsweise beim Einbau in ein Lenkrad erfordert die Integration nur einen zusätzlichen Arbeitsschritt, nämlich das Kaschieren der Trägerfolie mit der Innenseite der Verkleidung des Lenkrades.

In einer weiteren bevorzugten Ausgestaltung weist die Trägerfolie eine gute Wärmeleitfähigkeit auf. Vorteilhaft kann so die Wirkung des Heizleiters über die Fläche der Trägerfolie homogenisiert werden, so dass auf der Außenfläche des Lenkrades ein homogenes Temperaturfeld sowie ein gutes Ansprechverhalten der Lenkradheizung erreicht wird. Beim Einbau in ein Lenkrad ist bevorzugt vorgesehen, dass die Trägerfolie mit guter Wärmeleitfähigkeit mit der Innenseite der Verkleidung des Lenkrades kaschiert ist. Verkleidung bezeichnet hier die Außenhaut des Lenkrades. Bevorzugte Materialien für die Trägerfolie sind Kupfer oder Aluminium, welche eine gute Wärmeleitfähigkeit aufweisen und kostengünstig erhältlich sind.

Weiterhin bevorzugt ist vorgesehen, dass der faseroptische Berührungssensor zwischen zwei Trägerfolien angeordnet ist, wobei eine Trägerfolie eine gute Wärmeleitfähigkeit aufweist und die andere Folie wärmedämmende Eigenschaften hat. Beim Einbau in ein Lenkrad ist die Folie mit der wärmedämmenden Eigenschaft dabei in Richtung der Mitte des Lenkradkranzes gerichtet. Dadurch kann vorteilhaft die Wärmeabgabe ins Innere des Lenkradkranzes vermindert werden und somit ein Großteil der eingeleiteten Wärmeenergie für den Benutzer spürbar an die Oberfläche des Lenkradkranzes geleitet werden.

In einer alternativen aber gleichfalls bevorzugten Ausgestaltung ist vorgesehen, dass der faseroptische Berührungssensor mit dem Heizleiter in ein Matrixmaterial eingebettet ist. Dieses ist bevorzugt ein aufschäumbares Material, beispielsweise ein Polyurethan (PUR). Vorteilhaft ist so die Lage des faseroptischen Berührungssensors gut fixiert und sofern die Matrix nicht elektrisch leitfähig ist, können so auch faseroptische Berührungssensoren ohne den oben beschriebenen Isolationslack oder Kunststoffummantelung zur Anwendung kommen.

Der erfindungsgemäße Berührungssensor aus einem Lichtwellenleiter und einem elektrischen Leiter ist nach einer weiteren erfindungsgemäßen Ausgestaltung, dadurch gekennzeichnet, dass der elektrische Leiter um den Lichtwellenleiter gewickelt oder mit dem mindestens einen Lichtwellenleiter zusammengewickelt ist.

Das der elektrische Leiter um den Lichtwellenleiter gewickelt ist, bedeutet im Rahmen dieser Schrift, dass der Lichtwellenleiter gerade ausgerichtet ist und der elektrische Leiter um den Lichtwellenleiter herumgewickelt ist. Zusammengewickelt bedeutet hier, das weder Lichtwellenleiter noch elektrischer Leiter gerade geführt sind, sondern miteinander verwickelt sind.

Vorteilhaft wird durch die Erfindung ermöglicht, als Materialien für den Lichtwellenleiter auch Kunststofffasern einzusetzen, da der Schmelzpunkt des Materials bei der Herstellung keine Rolle spielt. Weiterhin vorteilhaft ist, dass die Herstellung deutlich günstiger ist, als nach dem Stand der Technik.

Der Lichtwellenleiter im Sinne dieser Anmeldung kann aus einer einzelnen Faser oder aus einem Faserbündel bestehen.

Der elektrische Leiter kann ebenfalls ein einzelner Leiter oder eine Litze sein. Es können ein oder mehrere elektrische Leiter vorgesehen sein, bei mehreren elektrischen Leitern können diese auch aus unterschiedlichem Material gefertigt sein.

In einer bevorzugten Ausgestaltung der Erfindung weist der Lichtwellenleiter eine Ummantelung auf. Die Ummantelung kann dabei aus verschiedenen Materialien angefertigt sein, beispielsweise Kunststoff oder auch Karbon. Vorteilhaft verbessert die Ummantelung die Totalreflektion im Außenbereich des Lichtwellenleiters als auch die mechanischen Eigenschaften des Lichtwellenleiters, beispielsweise kann das Risiko des Knickens des Lichtwellenleiters deutlich verringert werden.

In einer weiteren bevorzugten Ausgestaltung weist der elektrische Leiter eine Beschichtung mit einem Isolationslack auf. Vorteilhaft kann so ein Kurzschluss mit dem Leiter selbst oder anderen verhindert werden, wodurch auch mehrere, voneinander unabhängige elektrische Leiter integriert werden können. Beispielsweise kann so ein elektrischer Leiter zur Datenübertragung und ein weiterer elektrischer Leiter als Heizleiter in ein Leiterbündel eingesetzt werden. Als Isolationslacke sind beispielsweise Polyurethan, Polyesterimid oder eine Mischung aus Polyesterimid und Polyamidimid vorgesehen.

In einer bevorzugten Ausgestaltung verläuft der Lichtwellenleiter gerade und der elektrische Leiter ist um den Lichtwellenleiter herumgewickelt. Vorteilhaft wird so der eingeschränkten Biegsamkeit des Lichtwellenleiters in Verbindung der deutlich besseren Biegsamkeit des metallischen elektrischen Leiters Rechnung getragen.

Weiterhin bevorzugt hat die Umwicklung des Lichtwellenleiters mit dem elektrischen Leiter eine variable Schlaglänge. Vorteilhaft kann so bei der Verwendung des elektrischen Leiters als Heizleiter die Wärmeabgabe in verschiedenen Bereichen genau eingestellt werden. In einer alternativen Ausgestaltung können sich auch Bereiche unterschiedlicher Schlaglängen abwechseln.

Bevorzugt ist der Lichtwellenleiter aus Glasfaser, Polycarbonat (PC), Polymethylmethacrylat (PMMA) oder Elastomeren gefertigt. Die Querschnittsform des Lichtwellenleiters kann dabei beispielsweise rund, rechteckig, dreieckig, rechteckig mit mittiger Bohrung oder sechseckig sein.

Der elektrische Leiter besteht bevorzugt aus Kupfer, Aluminium, kupferbeschichtetem Aluminium, Messing, Silber, Gold, Nickel, Konstantan, Edelstahl oder anderen leitfähigen Materialien.

In einer weiteren bevorzugten Ausgestaltung ist der erfindungsgemäße Berührungssensor aus Lichtwellenleiter und elektrischem Leiter auf einer Trägerfolie angeordnet. Je nach Anwendung kann das Leiterbündel dabei flächig, beispielsweise mäanderförmig auf der Folie angeordnet sein. So kann vorteilhaft, bei Verwendung eines Heizleiters als elektrischer Leiter, eine flächige Wärmeabgabe erreicht werden. Dieser Effekt kann weiterhin vorteilhaft durch eine hohe Wärmeleitfähigkeit der Trägerfolie unterstützt werden.

Ein Lenkrad eines Fahrzeuges, insbesondere eines Kraftfahrzeuges, umfasst eine Lenkradnabe, die in der Drehachse des Lenkrades angeordnet ist. Als Lenkradkranz wird der äußere Bereich des Lenkrades bezeichnet, an dem der Benutzer im Normalfall anfasst. Der Lenkradkranz ist zumeist kreisrund, kann aber auch Abflachungen oder Unterbrechungen aufweisen. Lenkradkranz und Nabe verbinden Lenkradspeichen, die ebenfalls in Anzahl und Größe variieren.

Das erfindungsgemäße Lenkrad weist mindestens einen erfindungsgemäßen beheizbaren Berührungssensor auf.

Um eine genaue Detektion der Lenkradberührung zu ermöglichen, sind in einem Lenkrad bevorzugt eine Vielzahl von faseroptischen Berührungssensoren angeordnet. Vorteilhaft ist es so möglich festzustellen, ob eine oder beide Hände am Lenkrad sind, ob die Hand nur aufgelegt ist oder den Lenkradkranz umgreift und so weiter.

Es versteht sich, dass der beheizbare Berührungssensor nicht nur auf dem Lenkradkranz, sondern auch auf den Lenkradspeichen und/oder gegebenenfalls auch im Bereich der Lenkradnabe einsetzbar ist. Dies hängt insbesondere von der konkreten Ausgestaltung des Lenkrades ab. Ziel ist es, möglichst jede Berührung des Lenkrades feststellen zu können.

Hierfür wird in einer bevorzugten Ausgestaltung das Lenkrad in Kreissegmente unterteilt. Je nach gewünschter Genauigkeit und der Ausgestaltung des konkreten Lenkrades (zum Beispiel Größe und Lage der Lenkradspeichen) kann hier eine Anzahl Kreissegmente gewählt werden. Beispielsweise kann das Lenkrad in vier gleich große Kreissegmente unterteilt werden, oder auch nur in drei oder zwei. Häufig wird die Anzahl der vorhandenen Lenkradspeichen hierfür einen Anhaltspunkt geben. Die Trennung der Segmente sollte so sein, dass es unwahrscheinlich ist, dass beide Hände in einem Kreissegment angreifen.

Durch die Unterteilung in Kreissegmente wird vorteilhaft insbesondere die Feststellung ermöglicht, ob ein oder zwei Hände das Lenkrad berühren.

Weiterhin bevorzugt wird der Umfang des Lenkradkranzes in Zonen unterteilt. Zur Erläuterung werden nachfolgend beispielhaft Bereiche genannt: die dem Fahrer zugewandte Fläche, die dem Fahrer abgewandte Fläche, die der Lenkradnabe zugewandte Fläche und die der Lenkradnabe abgewandte Fläche. Die Unterteilung des Umfanges des Lenkradkranzes ermöglicht vorteilhaft die Feststellung, ob mit der Hand der Lenkradkranz umgriffen wird oder die Hand nur aufgelegt wird.

Durch die Unterteilung in Kreissegmente und Zonen werden Erfassungsbereiche definiert, die vorteilhaft eine genaue Feststellung der Position der Hände am Lenkrad ermöglichen. In jedem dieser Erfassungsbereiche wird hierfür ein Sensorelement integriert. Ein Sensorelement ist dabei ein flächiges Element aufweisend einen erfindungsgemäßen beheizbaren Berührungssensor. Das Sensorelement kann dabei in Größe und Form an den konkreten Einbauort angepasst sein. Je nach Ausgestaltung des konkreten Lenkrades können zusätzliche Erfassungsbereiche im Bereich der Lenkradspeichen oder auch der Lenkradnabe sinnvoll erscheinen.

Die Signale der Sensorelemente werden durch einen Auswertungsalgorithmus mittels eines Steuergerätes ausgewertet. Bei potentiell gefährlichen Handpositionen am Lenkrad beziehungsweise fehlender Berührung kann das System dann eine optische oder akustische Warnung ausgeben.

Weitere bevorzugte Ausgestaltungen der Erfindung ergeben sich aus den übrigen, in den Unteransprüchen genannten Merkmalen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: den Aufbau eines erfindungsgemäßen heizbaren, faseroptischen Berührungssensors,
- Figur 2: eine Variante der Integration eines heizbaren, faseroptischen Berührungssensors in ein Lenkrad,
- Figur 3: eine alternative Variante der Integration eines heizbaren, faseroptischen Berührungssensors in ein Lenkrad,
- Figur 4: eine Aufteilung eines Lenkrades in Kreissegmente als Erfassungszonen,
- Figur 5: die Darstellung des Querschnittes eines Lenkradkranzes mit Erfassungszonen,
- Figur 6: eine segmentierte Lenkradverkleidung mit erfindungsgemäßen heizbaren, faseroptischen Berührungssensoren,
- Figur 7: ein Diagramm der Ergebnisse der Berührungserfassung mit ausgeschalteter Heizung, und
- Figur 8: ein Diagramm der Ergebnisse der Berührungserfassung mit eingeschalteter Heizung, und
- Figur 9 und 10: weitere Ausführungsvarianten eines Berührungssensors.

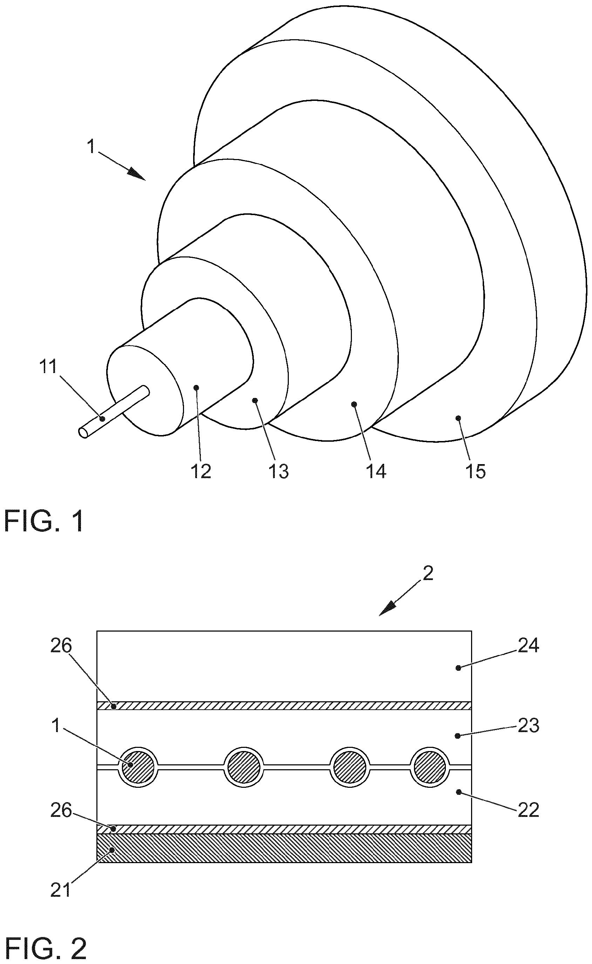

Figur 1 zeigt den Aufbau eines erfindungsgemäßen beheizbaren, faseroptischen Berührungssensors 1. Dieser hat im Kern einen Lichtwellenleiter 11, in Form einer Monomodefaser mit einem Durchmesser von 4 bis 10µm. Die Monomodefaser wird von einer Ummantelung 12 umschlossen, die einen Durchmesser von 50 bis 125µm aufweist.

Auf der Kernummantelung 12 ist eine Karbonschicht 13 angeordnet. Auf der Karbonschicht 13 ist ein Heizleiter 14 angeordnet, in diesem Ausführungsbeispiel in Form einer Kupferschicht mit einem Durchmesser von 165µm. Als äußerste Schicht ist ein Isolationslack 15 aufgetragen.

Figur 2 zeigt eine Schnittdarstellung eines Lenkradkranzes 2. Außenseitig hat der Lenkradkranz 2 eine Verkleidung 21 aus Leder. Die Innenseite der Verkleidung 21 ist mittels einer thermisch aktivierbaren Kaschierung 26 mit einer wärmeleitenden Folie 22 aus Aluminium, Kupfer oder einem anderen gut wärmeleitenden Material verbunden. Die wärmeleitende Folie 22 ist mit einer wärmeisolierenden Folie 23 verbunden, wobei zwischen der wärmeleitenden Folie 22 und der wärmeisolierenden Folie 23 der erfindungsgemäße beheizbare Berührungssensor 1 eingebettet ist. Die Einbettung erfolgt dabei mäanderförmig zwischen den beiden Folien 22 und 23, um eine flächige Berührungsdetektion und Erwärmung zu ermöglichen.

Die wärmeisolierende Folie 23 ist mit der Tragstruktur des Lenkradkranzes 24 aus zum Beispiel PUR-Material oder andere thermoplastischen Materialen und Kleber verklebt. Durch die Einbettung des beheizbaren faseroptischen Berührungssensors 1 in eine wärmeleitende Folie 22, die zur Außenseite der Lenkradkranzes 2 (der Angriffsfläche) gerichtet ist und einer wärmeisolierenden Folie 23, die zur Tragstruktur des Lenkradkranzes 2 gerichtet ist, wird eine homogene Wärmeverteilung auf der Angriffsfläche bei geringen Wärmeverlusten gewährleistet.

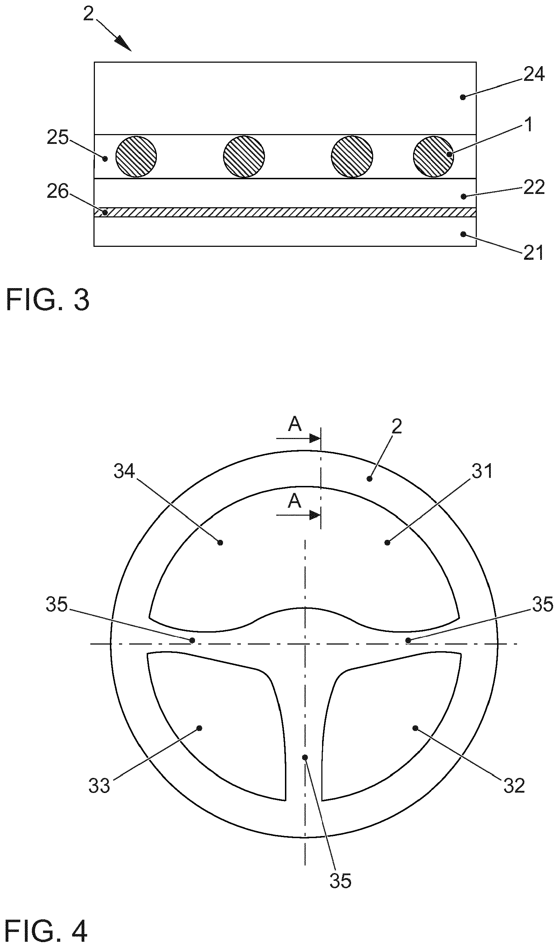

Figur 3 zeigt ebenfalls eine Schnittdarstellung eines Lenkradkranzes 2, mit einer alternativen Integration des erfindungsgemäßen beheizbaren faseroptischen Berührungssensors 1. Dieser ist hier in eine aufschäumbare, klebartige Matrix 25, die ebenfalls aus PUR gefertigt ist, eingebracht. Die Matrix 25 ist mit der Tragstruktur des Lenkradkranzes 24 verklebt. Zur Außenseite des Lenkradkranzes 2 gerichtet ist die Matrix 25 mit einer wärmeleitenden Folie 22 verklebt. Die wärmeleitende Folie 22 ist wieder mittels einer thermisch aktivierbaren Kaschierung 26 mit der Innenseite der Verkleidung 21 des Lenkradkranzes 2 verbunden. Auch hier ist der beheizbare Berührungssensor 1 mäanderförmig in die Matrix 25 eingebracht, um eine flächige Berührungsdetektion und Erwärmung zu ermöglichen.

Gut erkennbar ist die fertigungstechnisch sehr einfache Integration der Berührungsdetektion und Heizung in ein Lenkrad, da lediglich mittels Kaschierung 26 eine zusätzliche Schicht in Form des zwischen zwei Folien 22 und 23 angeordneten beheizbaren Berührungssensors 1 unter der Verkleidung 21 eingebracht werden muss.

Figur 4 zeigt die Aufteilung eines Lenkrades 3 mit einem Lenkradkranz 2 und Lenkradspeichen 35 in Kreissegmente zur Definition von Erfassungszonen der Lenkradberührung. Das Lenkrad 3 wurde anhand der Lenkradspeichen 35 in vier Kreissegmente 31, 32, 33 und 34 unterteilt.

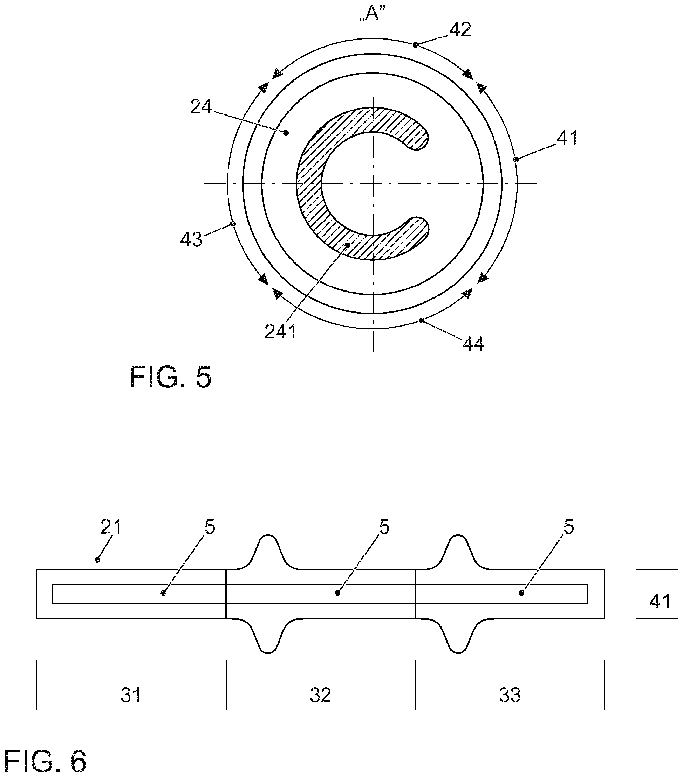

Figur 5 zeigt den Querschnitt des Kreissegmentes 31 in der in Figur 4 gezeigten Schnittebene A des Lenkradkranzes 2 mit Tragstruktur 24 und metallischem Träger 241. Über den Umfang des Lenkradkranzes 2 wurden ebenfalls vier Erfassungszonen 41, 42, 43 und 44 definiert. Die Erfassungszone 41 ist dem Fahrer zugewandt, die Erfassungszone 42 bezeichnet den zur Lenkradmitte (Lenkradnabe) gerichteten Bereich, die Erfassungszone 43 den dem Fahrer abgewandten (also dem Armaturenbrett zugewandten) Bereich und die Erfassungszone 44 den der Lenkradmitte abgewandten (also der Lenkradnabe abgewandten) Bereich.

In jedem der vier Segmente 31, 32, 33 und 34 sind jeweils vier auf die vier Zonen 41, 42, 43 und 44 verteilte Sensorelemente angeordnet. Durch diese Verteilung der Sensorelemente ist zum einen feststellbar, ob der Fahrer ein oder zwei Hände am Lenkradkranz 2 hat und in welchem Kreissegment 31, 32, 33 oder 34 sich diese befinden. Zudem ist feststellbar, ob der Fahrer die Hände nur auf den Lenkradkranz 2 auflegt, beispielsweise durch eine Detektion ausschließlich in der Zone 41, oder mit der Hand den gesamten Lenkradkranz 2 umfasst, durch Detektion in allen vier Erfassungszonen.

Figur 6 zeigt ein Element einer Verkleidung 21 eines Lenkradkranzes 2, auf dessen Innenseite Sensorelemente 5, bestehend aus wärmeleitender Folie 22, wärmeisolierender Folie 23 und dazwischen angeordneten, mäanderförmig die Fläche abdeckenden, beheizbaren faseroptischen Berührungssensor 1 (siehe Figur 2) . Das gezeigte Element der Verkleidung 21 deckt die Erfassungszone 41 des Lenkradkranzes 2 über die Segmente 31, 32 und 33 ab und weist für jedes Segment 31, 32, 33 ein Sensorelement 5 auf. So wird eine segmentierte Berührungserfassung der Erfassungszone 41 bei geringem Montageaufwand ermöglicht. Das Element der Verkleidung 21 wird dann mit weiteren Verkleidungselementen 21 verklebt, um den gesamten Lenkradkranz 2 zu verkleiden.

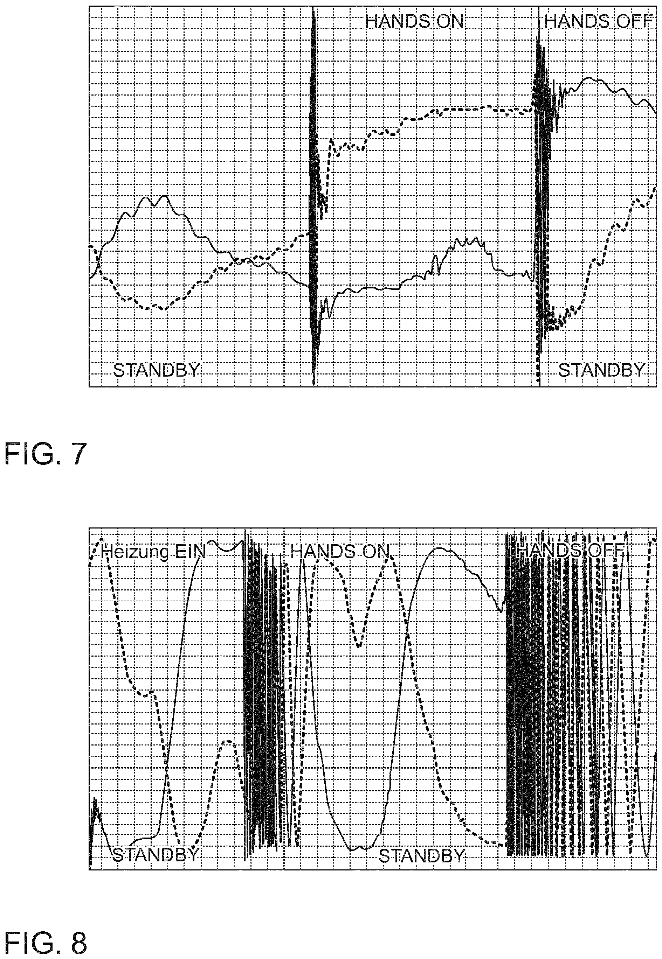

Figur 7 zeigt das Diagramm der Berührungserfassung mit ausgeschalteter Heizung. Es sind zwei Interferenz- Rohsignale PD1 (durchgezogene Linie) und PD2 (gestrichelte Linie) ersichtlich. Im linken Bereich des Diagramms ist das System im Standby, das heißt es erfolgt keine Berührung. Bei circa 4 s erfolgt eine Berührung des Lenkrades (Hands-on), die durch kurzes Rauschen beider Signale detektiert wird. Danach ist das System in einem quasistatischen Zustand. Bei circa 6 s wird das Lenkrad wieder losgelassen (Hands-off), was ebenfalls durch ein Rauschen beider Signale erkennbar ist. Danach befindet sich das System wieder im Standby. Gut erkennbar ist zudem ein unterschiedliches Signalverhalten bei Hands-on im Vergleich zu Hands-off.

Figur 8 zeigt das Diagramm aus Figur 7 mit eingeschalteter Heizung. Auch hier sind die Ereignisse Hands-on bei circa 2,7 s und Hands-off bei circa 7,3 s durch Rauschen gut erkennbar. Somit ist die Berührungserkennung unabhängig von der Heizungsfunktion.

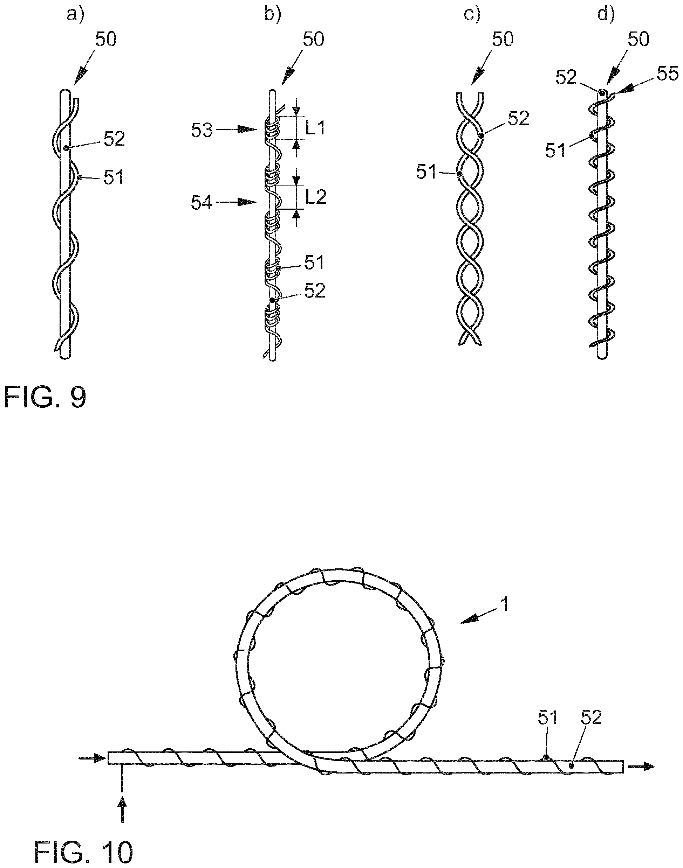

Nachfolgend werden anhand der Figuren 9 und 10 weitere Ausführungsvarianten erläutert, bei denen der Heizleiter als elektrischer Leiter (Draht) und ein Lichtwellenleiter gewickelt ist.

Figur 9 zeigt verschiedene Varianten a) bis d) eines Leiterbündels 50. In der Variante a) ist ein elektrischer Leiter 51 um einen geraden Lichtwellenleiter 52 mit konstanter Schlaglänge gewickelt.

In Variante b) ist ebenfalls der elektrische Leiter 51 um einen gerade geführten Lichtwellenleiter 52 gewickelt, jedoch mit zwei unterschiedlichen Schlaglängen. Es wechseln sich Bereiche 53 mit kurzer Schlaglänge L1 mit Bereichen 54 mit längerer Schlaglänge L2 ab.

Variante c) zeigt ein Leiterbündel 50 bei dem der Lichtwellenleiter 52 mit dem elektrischen Leiter 51 miteinander verwickelt sind, wobei der Lichtwellenleiter 52 hier nicht gerade geführt ist.

Variante d) zeigt einen gerade geführten Lichtwellenleiter 52, der mit zwei verschiedenen elektrischen Leitern 51 und 55 mit konstanter Schlaglänge umwickelt ist.

Figur 10 zeigt einen beheizbaren Berührungssensor 1 zum Einbau in ein Lenkrad unter die Lenkradverkleidung. Der Lichtwellenleiter 52 ist hier ein Berührungssensor, der mittels Interferometrie durch die Lenkradverkleidung Lageänderungen beziehungsweise Biegung und damit Berührungen durch den Benutzer detektiert. Um den Lichtwellenleiter 52 ist ein elektrischer Leiter 51 gewickelt, der als Widerstandsheizung wirkt. Zum Einbau in das Lenkrad wird der beheizbare Berührungssensor auf einer hier nicht gezeigten Trägerfolie mäanderförmig aufgebracht, um eine flächige Detektion und Heizung zu ermöglichen. Die Trägerfolie ist aus Aluminium gefertigt und hat so eine sehr gute Wärmeleitfähigkeit, so dass die Lenkradheizung schnell anspricht. Es versteht sich, dass der elektrische Leiter 51mit einem Isolationslack versehen ist, um einen elektrischen Kurzschluss zu verhindern.

### Bezugszeichenliste

- 1: Berührungssensor
- 11: Lichtwellenleiter
- 12: Ummantelung
- 13: Karbonschicht
- 14: Heizleiter
- 15: Isolationslack
- 2: Lenkradkranz
- 21: Verkleidung
- 22: wärmeleitende Folie
- 23: wärmeisolierende Folie
- 24: Tragstruktur Lenkradkranz
- 241: metallischer Träger
- 25: Matrix
- 26: Kaschierung
- 3: Lenkrad
- 31: 1. Kreissegment
- 32: 2. Kreissegment
- 33: 3. Kreissegment
- 34: 4. Kreissegment
- 35: Lenkradspeichen
- A: Schnittebene durch Lenkradkranz 2
- 41: 1. Erfassungszone
- 42: 2. Erfassungszone
- 43: 3. Erfassungszone
- 44: 4. Erfassungszone
- 5: Sensorelement
- 50: Leiterbündel
- 51: elektrischer Leiter
- 52: Lichtwellenleiter
- 53: Bereich
- 54: Bereich
- 55: elektrischer Leiter

## Patentansprüche

1. Beheizbarer Berührungssensor (1) aufweisend einen Lichtwellenleiter (11) und einen elektrischen Heizleiter (14), **dadurch gekennzeichnet, dass** der elektrische Heizleiter (14) eine um den Lichtwellenleiter (11) angeordnete Schicht eines elektrisch leitfähigen Materials ist.

2. Beheizbarer Berührungssensor (1) nach Anspruch 1, **dadurch gekennzeichnet, dass** der Lichtwellenleiter (11) eine Monomodefaser ist.

3. Beheizbarer Berührungssensor (1) nach einem der vorangehenden Ansprüche, **dadurch gekennzeichnet, dass** die Berührungsdetektion mittels optischer Interferometrie erfolgt.

4. Beheizbarer Berührungssensor (1) nach einem der vorangehenden Ansprüche, **dadurch gekennzeichnet, dass** der beheizbare faseroptische Berührungssensor (1) auf einer Trägerfolie (22, 23) angeordnet ist.

5. Beheizbarer Berührungssensor (1) nach Anspruch 4, **dadurch gekennzeichnet, dass** die Trägerfolie (22) eine gute Wärmeleitfähigkeit aufweist.

6. Beheizbarer Berührungssensor (1) nach Anspruch 4, **dadurch gekennzeichnet, dass** der beheizbare faseroptische Berührungssensor (1) zwischen zwei Trägerfolien (22, 23) angeordnet ist, wobei die zweite Folie (23) wärmeisolierende Eigenschaften hat.

7. Beheizbarer Berührungssensor (1) nach einem der vorangehenden Ansprüche, **dadurch gekennzeichnet, dass** der beheizbare faseroptische Berührungssensor (1) in ein Matrixmaterial (25) eingebettet ist.

8. Beheizbarer Berührungssensor aufweisend einen Lichtwellenleiter (52) und einen elektrischen Heizleiter (51), **dadurch gekennzeichnet, dass** der elektrische Heizleiter (51) um den Lichtwellenleiter (52) gewickelt oder mit dem Lichtwellenleiter (52) zusammengewickelt ist.

9. Lenkrad (3) aufweisend einen beheizbaren Berührungssensor (1) nach einem der vorangehenden Ansprüche.

10. Lenkrad (3) nach Anspruch 9, **dadurch gekennzeichnet, dass** das Lenkrad (3) in Kreissegmente (31, 32, 33, 34) unterteilt ist, wobei jedes Kreissegment (31, 32, 33, 34) mindestens einen beheizbaren Berührungssensor (1) aufweist.

11. Lenkrad (3) nach Anspruch 10, **dadurch gekennzeichnet, dass** für jedes Kreissegment (31, 32, 33, 34) über den Querschnitt des Lenkradkranzes (2) mehrere Erfassungszonen (41, 42, 43, 44) definiert sind, wobei jede Erfassungszone (41, 42, 43, 44) mindestens einen beheizbaren Berührungssensor (1) aufweist.

12. Lenkrad (3) nach Anspruch 10 oder 11, **dadurch gekennzeichnet, dass** mindestens ein beheizbarer Berührungssensor (1) im Bereich der Lenkradspeichen (35) angeordnet ist.

13. Lenkrad (3) nach einem der Ansprüche 9 bis 12, **dadurch gekennzeichnet, dass** mindestens ein beheizbarer Berührungssensor (1) mäanderförmig angeordnet ist, so dass dieser eine flächige Ausdehnung hat.

## Claims

1. Heatable contact sensor (1) having an optical waveguide (11) and an electrical heat conductor (14), **characterized in that** the electrical heat conductor (14) is a layer of an electrically conductive material that is arranged around the optical waveguide (11).

2. Heatable contact sensor (1) according to Claim 1, **characterized in that** the optical waveguide (11) is a monomode fibre.

3. Heatable contact sensor (1) according to either of the preceding claims, **characterized in that** contact is detected by means of optical interferometry.

4. Heatable contact sensor (1) according to one of the preceding claims, **characterized in that** the heatable fibre-optic contact sensor (1) is arranged on a carrier film (22, 23).

5. Heatable contact sensor (1) according to Claim 4, **characterized in that** the carrier film (22) exhibits good thermal conductivity.

6. Heatable contact sensor (1) according to Claim 4, **characterized in that** the heatable fibre-optic contact sensor (1) is arranged between two carrier films (22, 23), wherein the second film (23) has heat-insulating properties.

7. Heatable contact sensor (1) according to one of the preceding claims, **characterized in that** the heatable fibre-optic contact sensor (1) is embedded in a matrix material (25).

8. Heatable contact sensor having an optical waveguide (52) and an electrical heat conductor (51), **characterized in that** the electrical heat conductor (51) is wrapped around the optical waveguide (52) or is twisted together with the optical waveguide (52).

9. Steering wheel (3) having a heatable contact sensor (1) according to one of the preceding claims.

10. Steering wheel (3) according to Claim 9, **characterized in that** the steering wheel (3) is divided into circle segments (31, 32, 33, 34), wherein each circle segment (31, 32, 33, 34) has at least one heatable contact sensor (1).

11. Steering wheel (3) according to Claim 10, **characterized in that** a plurality of capturing zones (41, 42, 43, 44) are defined for each circle segment (31, 32, 33, 34) over the cross section of the steering wheel rim (2), wherein each capturing zone (41, 42, 43, 44) has at least one heatable contact sensor (1).

12. Steering wheel (3) according to Claim 10 or 11, **characterized in that** at least one heatable contact sensor (1) is arranged in the region of the steering wheel spokes (35).

13. Steering wheel (3) according to one of Claims 9 to 12, **characterized in that** at least one heatable contact sensor (1) is arranged in a meandering way so that the latter has a two-dimensional extent.

## Revendications

1. Capteur de contact chauffable (1), présentant un guide d'ondes optiques (11) et un conducteur chauffant électrique (14),
**caractérisé en ce que** le conducteur chauffant électrique (14) est une couche d'un matériau électriquement conducteur, disposée autour du guide d'ondes optiques (11).

2. Capteur de contact chauffable (1) selon la revendication 1, **caractérisé en ce que** le guide d'ondes optiques (11) est une fibre optique monomode.

3. Capteur de contact chauffable (1) selon l'une quelconque des revendications précédentes, **caractérisé en ce que** la détection de contact est effectuée par interférométrie optique.

4. Capteur de contact chauffable (1) selon l'une quelconque des revendications précédentes, **caractérisé en ce que** le capteur de contact chauffable (1) à fibre optique est disposé sur une feuille de support (22, 23) .

5. Capteur de contact chauffable (1) selon la revendication 4, **caractérisé en ce que** la feuille de support (22) présente une bonne conductibilité thermique.

6. Capteur de contact chauffable (1) selon la revendication 4, **caractérisé en ce que** le capteur de contact chauffable (1) à fibre optique est disposé entre deux feuilles de support (22, 23), la deuxième feuille (23) ayant des propriétés d'isolation thermique.

7. Capteur de contact chauffable (1) selon l'une quelconque des revendications précédentes, **caractérisé en ce que** le capteur de contact chauffable (1) à fibre optique est incorporé dans une matière matricielle (25) .

8. Capteur de contact chauffable, présentant un guide d'ondes optiques (52) et un conducteur chauffant électrique (51), **caractérisé en ce que** le conducteur chauffant électrique (51) est enroulé sur le guide d'ondes optiques (52) ou enroulé conjointement avec le guide d'ondes optiques (52).

9. Volant (3), présentant un capteur de contact chauffable (1) selon l'une quelconque des revendications précédentes.

10. Volant (3) selon la revendication 9, **caractérisé en ce que** le volant (3) est divisé en segments de cercle (31, 32, 33, 34), chaque segment de cercle (31, 32, 33, 34) présentant au moins un capteur de contact chauffable (1).

11. Volant (3) selon la revendication 10, **caractérisé en ce que** plusieurs zones de détection (41, 42, 43, 44) sont définies sur la section transversale de la couronne de volant (2) pour chaque segment de cercle (31, 32, 33, 34), chaque zone de détection (41, 42, 43, 44) présentant au moins un capteur de contact chauffable (1).

12. Volant (3) selon la revendication 10 ou 11, **caractérisé en ce qu'**au moins un capteur de contact chauffable (1) est disposé au niveau des rayons de volant (35).

13. Volant (3) selon l'une quelconque des revendications 9 à 12, **caractérisé en ce qu'**au moins un capteur de contact chauffable (1) est disposé en forme de méandre de sorte qu'il s'étend en nappe.
